(19) **Europäisches Patentamt**

**European Patent Office**

**Office européen des brevets**

(11) **EP 1 666 639 A1**

(12) **EUROPEAN PATENT APPLICATION**
published in accordance with Art. 158(3) EPC

(43) Date of publication:
**07.06.2006 Bulletin 2006/23**

(51) Int Cl.:
**C25B 11/12** *(1974.07)* **C02F 1/461** *(2000.01)*

(21) Application number: **04771507.3**

(22) Date of filing: **04.08.2004**

(86) International application number:
**PCT/JP2004/011522**

(87) International publication number:
**WO 2005/014887 (17.02.2005 Gazette 2005/07)**

(84) Designated Contracting States:
**DE**

(30) Priority: **08.08.2003 JP 2003289865**
**12.09.2003 JP 2003322044**
**19.09.2003 JP 2003328678**

(71) Applicant: **EBARA CORPORATION**
**Tokyo 144-8510 (JP)**

(72) Inventors:
• **OGURE, Naoaki,**
**c/o EBARA CORPORATION**
**Tokyo 1448510 (JP)**
• **TSUJIMURA, Manabu,**
**c/o EBARA CORPORATION**
**Tokyo 1448510 (JP)**

(74) Representative: **Lang, Johannes**
**Bardehle Pagenberg Dost Altenburg Geissler,**
**Postfach 86 06 20**
**81633 München (DE)**

(54) **SUBMERGED ELECTRODE AND MATERIAL THEREOF**

(57) To provide an electrode that is stable in liquid and is capable of processing a large volume of liquid and a small electrode that is capable of processing a large volume of liquid at high speed; provide a liquid processor and method of processing liquid in which the electrode is used; provide and electrode material being hard to be damaged by thermal stress; and provide an electrode, liquid processor and method of processing liquid in which the electrode material is used. [Means for solving problems] An electrode of configuration resulting from coating solid pieces of 5 to 60 mm size with electrically conductive diamond, supporting them on supports and bringing the same into contact with each other so as to realize current passage as a whole is used in various electrochemical process. Also, an electrode including (1) electrically conductive substrate, (2) covering layer covering the electrically conductive substrate and (3) electrically conductive diamond particles fixed on the covering layer, wherein each of the electrically conductive diamond particles is partially brought into contact with the electrically conductive substrate and another portion thereof is partially exposed on the surface of the covering layer. Further, an electrode material, wherein an entire side surface of columnar or tubular substrate is coated with electrically conductive diamond is used.

FIG. 1

**Description**

Technical Field

The present invention relates to an electrode material coated with electrically conductive diamond. In more detail, the invention relates to an electrode material assemblage where solid pieces having a magnitude of 5 to 60 mm are coated with electrically conductive diamond and brought into contact with each other, and an electrode therewith.

Furthermore, the invention relates to an electrode where electrically conductive diamond particles are brought into contact with an electrically conductive substrate to fix and a manufacturing method thereof, and furthermore a liquid processor therewith and a liquid processing method therewith.

Still furthermore, the invention relates to an electrode material where an entire side surface of a columnar or tubular substrate is coated with electrically conductive diamond and an electrode therewith, and furthermore a liquid processor therewith and a liquid processing method therewith.

Background Art

It is carried out that electrically conductive diamond is deposited film-like on a surface of a substrate to form an electrode, followed by energizing the electrode to cause electrolysis in liquid, and thereby the liquid is modified. This is due to the nature (wide potential window) that when the electrically conductive diamond is used as an electrode the lower limit voltage until water is electrolyzed can be set very higher than other electrodes.

Features of causing an electrochemical reaction in liquid with the electrically conductive diamond as an electrode can be summarized in five points below. That is,

(1) wide potential window, (2) small background current,

(3) physical and chemical stability, (4) low electron mobility to a redox system and (5) selectivity of electrode reactions can be cited (non-patent literatures 1 through 3).

Among these, the (1) is due to a fact that since the diamond is formed of so-called $sp^3$-carbons, adsorption sites of chemical species on a surface are very scarce. Accordingly, the diamond has a feature that an overvoltage generated when it is used as an electrode of electrolysis of water is such high as 1.0 V for hydrogen and 1.2 V for oxygen, and, as a whole potential window, very high such as 3.5 V. For instance, in non-patent literature 2, a wide potential window of the diamond electrode is shown in comparison with other electrode materials. That is, the potential window is, in comparison with 1.6 to 2.2 V when for instance a platinum electrode is used and about 2.8 V when a glassy carbon electrode is used, 3.2 to 3.5 V when the diamond electrode is used.

The (2) is caused by a situation that since the diamond, in comparison with ordinary electrically conductive materials, has characteristics much closer to that of a semiconductor and a structure fewer in surface functional groups, electric double layer capacitance of a surface is such a small value as several $\mu F/cm^2$, which is even two digits smaller than that of the glassy carbon. This is because a current density necessary for transferring carriers onto a surface of the electrode to form an electric double layer affects on a background current density. As a result, since a high signal current/background current ratio can be obtained, an electrode where the electrically conductive diamond is used can become an electrode of a sensor highly sensitive to, for instance, a redox material, or a micro-sensor of metals or ecological substances contained in an aqueous solution.

Furthermore, as to the (5), since there is selective reactivity where, when the diamond electrode is used, while oxidation and reduction of water can be suppressed, a redox reaction of a solute can be very easily caused, the electrode is very high in the availability in a sensor, liquid processing and liquid modification. In the patent literature 1, a processing method of a wastewater solute, in which with an anode including the electrically conductive diamond a solution is electrolyzed to oxidize a solute, is disclosed.

Still furthermore, when boron (B) that is a P-type impurity is doped in a diamond coating and a doped level thereof is varied, the specific resistance can be freely altered. When boron is doped up to substantially $10^4$ ppm, which is the maximum permissible concentration of a CVD diamond coating, the specific resistance can be lowered to substantially $10^4$ $\mu\Omega cm$ (non-patent literatures 3 and 4). Furthermore, the non-patent literature 2 shows that, as an example of variation of a potential window when an amount of doped boron is varied, when an amount of introduced boron is $10^2$ ppm in a 0.1 mol/l $Na_2SO_4$ solution, a particularly wide potential window such as 5.0 V or more can be obtained.

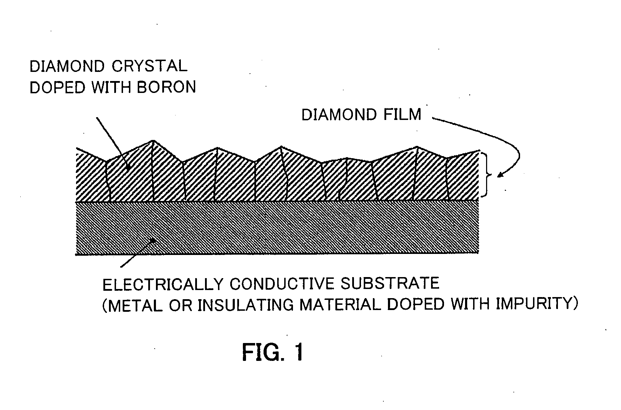

However, in order to efficiently carry out, with the electrically conductive diamond as an electrode, electrolysis of a large volume of liquid and a redox process or decomposition of a substance in liquid, a large area and defect-free diamond surface has to be secured. Normally, when a diamond-coated electrode is prepared, with an electrically conductive substrate (metal or impurity-doped insulator) as an underlayer as shown in Fig. 1, electrically conductive diamond is deposited at least partially on a surface of the substrate. As a technology of coating a substrate with diamond, technologies implementing for instance a hot-filament CVD or a microwave CVD have been established. In order to impart the electrical conductive properties to diamond that is intrinsically an insulator, a doping gas containing boron or the like is introduced in a CVD deposition atmosphere.

However, it is very difficult to form a diamond coating free from defect, that is, high in the healthiness, on a large area substrate. In particular, when an electrode is used in a highly corrosive liquid, the lifetime of the coating is largely deteriorated by the presence of the defects.

In particular, there is a problem in that when a diamond film is formed by means of a CVD method on a substrate having an area more than a definite value, in some cases, owing to large difference between the thermal expansion coefficients of the substrate and diamond, the thermal stress is generated to damage a once-formed diamond film during the diamond film is cooled.

In order to complement the disadvantage, many segments each having a small coated area are adhered to constitute an electrode or a coating thickness is unnecessarily increased to control the damage of the coating due to the defects to make the lifetime as long as possible. However, these cannot be a fundamental countermeasure.

Furthermore, as the biggest problem when an electrochemical process is carried out with the electrically conductive diamond electrode, since an electrode size becomes inevitably larger, difficulties from viewpoints of unit design and installment cost can be cited. This is because, different from an ordinary chemical plant where a reaction occurs in an entire region of a fluid, a reaction is generated in a limited region on an electrode surface and the process uses of the reaction in the limited region. That is, this is caused from a situation that is called the destiny of the electrochemical reaction.

The foregoing problems will be described with reference to a specific example. For instance, a case where pulp wastewater is decolorized through electrolysis with a diamond electrode will be considered. According to our laboratory experiment, in an extreme case, an amount of electricity necessary for completely decolorizing, by use of a diamond electrode process with 1 L of stock solution of pulp wastewater (black liquid), is 400 Ah at a moderate estimate (when 7.5 V is applied between electrodes). With a case of a plant where a decolorizing process is carried out at a slow processing speed of 1 L/min as an example, necessary electric power can be roughly calculated as such a huge value as follows.

$$1 \text{ L/min} \times 400 \text{ Ah/L} \times 7.5 \text{ V} = 3 \text{ kWh/min} = 3 \times 3{,}600$$

$$\text{kWs/60s} = 180 \text{ kW}$$

Accompanying a consumption of the foregoing large electric power, there is a disadvantage in that an electrode area inevitably tends to be made larger.

A necessary value of the electrode area, even when a current density on an electrode surface is set at an upper limit value, 40 mA/cm$^2$, in soda industries, becomes such a huge area as $180 \times 10^3$ W/7.5 V $\div$ ($40.0 \times 10^{-3}$ A/cm$^2$) = 60 m$^2$. Although this is an extreme case where a stock solution of black liquid is completely decolorized, when only 1 L of wastewater is processed every minute, such a huge area becomes necessary. This can be said very inconvenient and disadvantageous.

(Patent literature 1): JP-A-7-299467

(Non-patent literature 1): K. Honda, I. Yagi and A. Fujishima, *Shokubai,* 41, 4 (1999), p.264
(Non-patent literature 2): K. Honda and J. Shimizu, *Meidenjihou,* 271, 2000, No.2 (2000), p. 29
(Non-patent literature 3): Nozu and et al, *Electrochemistry,* 67, 4 (1999)
(Non-patent literature 4): Yagi and et al., *Hyoumengijyutu,* 50, 6 (1999)

Disclosure of Invention

(Problems that the Invention is to Solve)

An object of the invention is to provide an electrode that is stable even in liquid and can process a large volume of liquid.

Furthermore, another object of the invention is to provide a small size electrode that can process a large volume of liquid at a high-speed, and a liquid processor and a liquid processing method therewith.

Still another object of the invention is to provide an electrode material that is hard to be damaged owing to the thermal stress, and an electrode, a liquid processor and a liquid processing method therewith.

(Means for Solving the Problems)

The present inventors found that when an electrode material obtained by coating diamond on particular solid pieces, an electrode material assemblage where the foregoing electrode materials are brought into contact each other and an electrode obtained by supporting the electrode material assemblage by a support were used, the abovementioned problems could be overcome, and thereby the invention came to completion.

Furthermore, the inventors found that different from an existing general method where film-like diamond is deposited on a planar substrate, when electrically conductive diamond particles were brought into contact with an electrically conductive substrate and fixed thereon, the abovementioned problems could be overcome, and thereby the invention came to completion.

Still furthermore, the inventors found that different from an existing general method where film-like diamond is deposited on a planar substrate, when an electrode obtained by coating electrically conductive diamond on an entire side surface of a columnar or tubular substrate was used, the abovementioned problems could be overcome, and thereby the invention came to completion.

That is, the invention relates to an electrode material obtained by coating solid pieces having a magnitude of 5 to 60 mm with electrically conductive diamond.

Furthermore, the invention relates to an electrode material assemblage comprising at least two of the electrode materials, wherein one electrode material comes into contact with at least one of other electrode materials.

Still furthermore, the invention relates to an electrode comprising the electrode material assemblage.

Furthermore, the invention relates to an electrode obtained by supporting the electrode material assemblage with a support.

Still furthermore, the invention relates to an electrode comprising (1) an electrically conductive substrate, (2) a covering layer that covers the electrically conductive substrate and (3) electrically conductive diamond particles fixed to the covering layer, wherein each of the electrically conductive diamond particles partially comes into contact with the electrically conductive substrate and another portion of the each of electrically conductive diamond particles is exposed on a surface of the covering layer.

Furthermore, the invention relates to a liquid processor comprising the electrode.'

Still furthermore, the invention relates to a processing method of a liquid, which uses the electrode.

Furthermore, the invention relates to a manufacturing method of an electrode, the method comprising (1) forming a covering layer on an electrically conductive material, (2) placing electrically conductive diamond particles on the covering layer, (3) bringing the electrically conductive diamond particles into contact with an electrically conductive substrate, and (4) curing the covering layer to fix the electrically conductive diamond particles onto the covering layer.

Still furthermore, the invention relates to a manufacturing method of an electrode, the method comprising (1) bringing electrically conductive diamond particles into contact with an electrically conductive substrate, (2) forming a covering layer on a surface of an electrically conductive material, and (3) curing the covering layer to fix the electrically conductive diamond particles onto the covering layer.

Furthermore, the invention relates to an electrode material obtained by coating an entire side surface of a columnar or tubular substrate with electrically conductive diamond particles.

Still furthermore, the invention relates to an electrode material assemblage comprising the foregoing electrode materials, one of the electrode materials electrically coming into contact with at least one of other electrode materials.

Furthermore, the invention relates to an electrode comprising the electrode material and/or electrode material assemblage.

Still furthermore, the invention relates to a liquid processor comprising the electrode.

Furthermore, the invention relates to a liquid processing method that uses the electrode.

(Advantages of the Invention)

An electrode material and an electrode material assemblage according to the invention have characteristics very useful in a redox reaction of a solute in a solution and so on, and an electrode according to the invention can be used as an electrode for a sensor, liquid processing, modification or the like.

Furthermore, according to the invention, a small size electrode that can process a large volume of liquid at a high-speed can be obtained. Still furthermore, when a liquid processor comprising the electrode according to the invention is used, a small size and high performance processor can be provided. Furthermore, when a liquid processing method according to the invention is used, a large volume of liquid can be processed at a high-speed.

Still furthermore, according to the invention, even when an electrically conductive diamond film is formed by means of a high temperature process and then cooled to room temperature, an electrode material that is hard to be damaged by the thermal stress can be obtained.

Brief Description of the Drawings

Fig. 1 is a conceptual diagram showing an electrically conductive diamond coating to a substrate, an electrically conductive diamond film being deposited on a substrate (conceptual diagram).

Fig. 2 is a diagram showing a diamond coating with a hot filament CVD device, the hot filament CVD device being used to deposit.

Fig. 3 is an example of an electrode according to the invention, an anode being prepared by assembling solid pieces (the present invention).

Fig. 4 is an example of an electrode according to the invention, a shape and arrangement of electrodes (unit: mm) being shown.

Fig. 5 is a diagram showing a variation of chromaticity with an energizing time, variation of the chromaticity rate with energization time being shown of two different-shaped electrodes (A current density on an anode surface is constant at 50 mA/cm$^2$).

Fig. 6 is a diagram showing an electrode according to the invention, electrically conductive diamond particles being brought into contact with and fixed to a substrate surface to manufacture a submerged electrode.

Fig. 7 is a diagram showing an example of a manufacture flow of an electrode according to the invention, a procedure of bringing electrically conductive diamond particles into contact with a substrate surface to fix thereon with a thermoplastic adhesive being shown.

Fig. 8 is a diagram showing an electrode according to the invention, diamond particles and a covering layer of an adhesive being engaged with each other to fix electrically conductive diamond particles (conceptual diagram).

Fig. 9 is a diagram showing a comparison between an electrode according to the invention and a diamond film electrode while showing situations of electrode surfaces. (a) Electrically conductive diamond particles are densely brought into contact with a substrate and fixed thereon (the present invention). (b) Electrically conductive diamond is deposited film-like on a substrate (comparative example 3).

Fig. 10 is a diagram showing a process flow of a method for processing a liquid according to the invention, a process flow system of an experimental device being shown.

Fig. 11 is a diagram showing a shape of an electrode material according to the invention, a periphery of a slender columnar substrate being coated with a diamond film.

Fig. 12 is a diagram showing a ratio of inner diameter/outer diameter of a tube and the thermal stress in a peripheral direction, a relationship between a ratio of inner diameter/outer diameter (r1/r2) of a tube and the thermal stress ($\sigma_t$) (on an inner periphery) in a peripheral direction being shown.

Fig. 13 is a diagram showing a planar electrode, a diamond film elongated in a direction perpendicular to a thickness being shown.

Fig. 14 is a diagram showing a variation of a film thickness with time, a film thickness variation (variation of initial film thickness) of an electrically conductive diamond film electrode (according to the invention) with time in a wastewater process being shown.

Fig. 15 is a diagram showing a situation of decolorization, the situation of decolorization due to an electrochemical processing of overflow water of a condensation bath being shown.

Fig. 16 is a diagram showing (a) the inventive electrode and (b) comparative example electrode, a round bar being shown for (a) the inventive electrode and a flat plate being shown for (b) the comparative example electrode (unit: mm).

Fig. 17 is a diagram showing a decrease in the film thickness with time under an acceleration condition comparing the inventive electrode and planar electrode, a decreasing behavior of film thickness with time being compared between these electrode shapes (accelerated test).

Best Mode for Carrying Out the Invention

In the invention, different from an existing method where a diamond coating is formed on a relatively flat substrate to form an electrode, solid pieces having a magnitude of 5 to 60 mm are coated in advance with electrically conductive diamond, supported on a substrate, further brought into contact with each other so as to realize electrical conductive properties as a whole, and thereby an electrode is manufactured. The electrode is utilized in various electrochemical processes.

As a shape of solid pieces that are used in the invention, as long as it allows coating diamond thereon, there is no particular restriction. For instance, block materials such as particle-like, beads-like, spherical or hornlike; or linear materials (slender one) such as fiber-like, string-like, steel-like, cord-like or bar-like can be cited.

A magnitude of the solid piece used in the invention is 5 to 60 mm. When the magnitude of the solid piece is less than 5 mm, in some cases, a target liquid is inhibited from actively going through, a flow in the periphery of the solid piece stagnates and a liquid composition in the vicinity of the solid piece generates a local inhomogeneity of the concentration to lower the processing efficiency. Furthermore, when the magnitude of the solid piece exceeds 60 mm, in some cases, a wetted area as an electrode decreases to lower the efficiency and speed of a predetermined liquid processing.

In the invention, a magnitude of a solid piece means a diameter when the solid piece is a substantial sphere such as particle-like one, beads-like one or spherical one, and means the maximum length when the solid piece is hornlike one or other block materials. Furthermore, a magnitude of a solid piece in the invention means the longest length in a longitudinal direction when the solid piece is a linear material (slender one) such as fiber-like one, string-like one, steel-like one, cord-like one or bar-like one. Accordingly, for instance, when the solid piece is fiber-like one, even when a diameter thereof is less than 5 mm, when a length thereof is 5 to 60 mm, it can be used as the solid piece in the invention.

As a material of the solid piece that is used in the invention, as long as it can be coated with diamond, there is no restriction. For instance, molybdenum, niobium, iridium, rhenium, tantalum, tungsten, silicon and so on can be cited. Among these, molybdenum and niobium can be cited as preferable examples.

In the invention, a thickness of the diamond coating of the electrode material that uses a solid piece is preferably in the range of 2 to 20 $\mu$m. When the thickness is less than 2 $\mu$m, in the case of a defect being present in the coating, in some cases, an effect of the defect can be largely affected. On the other hand, when it exceeds 20 $\mu$m, a coating process takes a longer time and the cost for the coating process becomes high, resulting in, in some cases, deteriorating the cost performance of the effect of suppressing an influence of defect to the cost of coating.

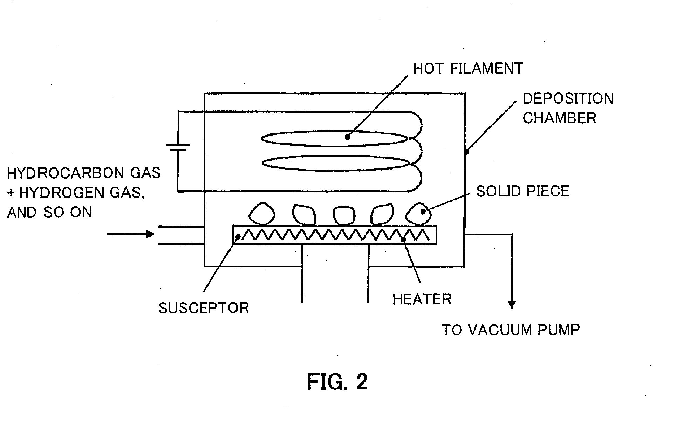

A method of manufacturing an electrode material of the invention, as long as the method allows coating diamond on a solid piece, is not restricted to a particular one. For instance, as shown in Fig. 2, when a solid piece is placed on a susceptor of a hot-filament CVD device and a CVD operation is applied, a solid piece coated with diamond can be obtained. As a material of the solid piece at this time, one that can withstand a high temperature when the CVD is applied is used.

As another method of manufacturing an electrode material of the invention, for instance, microwave plasma CVD can be used. An example of general coating conditions of diamond is shown in Table 1. Under the conditions, diamond can be readily coated at a coating velocity in the range of 0.1 to 10 $\mu$m/hr.

Table 1. General Conditions for Depositing Diamond by means of Microwave Plasma CVD

| Temperature of Substrate | 600 to 900°C |
|---|---|
| Concentration of Methane | 0.1 to 10% (diluted with hydrogen) |
| Pressure | 20 to 120 Torr |
| Power of Microwave | 0.3 to 5 kW |
| Species of Doping Gas (P Type) | Diborane $B_2H_6$ |

An electrode material assemblage according to the invention can be formed when the foregoing electrode materials are brought into electrical contact with each other. A method of bringing the electrode materials into contact, as long as an electric current is allowed flowing between the electrode materials, is not restricted to a particular one. For instance, a method where electrode materials are supported on a support and directly brought into contact with each other, alternatively a method where electrode materials are knitted or entwined each other to bring the electrode materials into direct contact with each other can be used. As another method of bringing the electrode materials into electrical contact with each other, a method where another electrically conductive material is inserted between the electrode materials to bring the electrode materials into indirect contact with each other can be cited. An electrically conductive material that is inserted, as long as it has the electrical conductive properties, is not restricted to a particular one. For instance, a metal, an electrically conductive polymer, an electrically conductive adhesive, electrically conductive ceramics, carbon or the like can be cited. When the electrode materials are adhered each other through an adhesive, an electrode material assemblage can be used as it is as an electrode. The electrically conductive material inserted here is preferably one that is less in the deterioration or damage when coming into contact with liquid while the electrode is used.

A shape of the support that is used in the invention, as long as it can support a plurality of electrode materials to form an electrode material assemblage or it can support the electrode material assemblage, is not particularly restricted. Normally, a tubular or hollow rectangular columnar one is used. A side surface, bottom surface and/or top surface thereof are preferably formed in mesh. When the support is formed in mesh, in liquid, the liquid can actively go through the periphery of the electrode material assemblage. A size of the mesh, though determined appropriately depending on a magnitude of the electrode that is used itself or the nature of the liquid, is normally in the range of substantially 5 to 20 mm.

Furthermore, as a material of a support that is used in the invention, any one of electrically conductive one and electrically insulating one can be used. However, the electrically conductive one is preferable. For instance, titanium and gold can be cited.

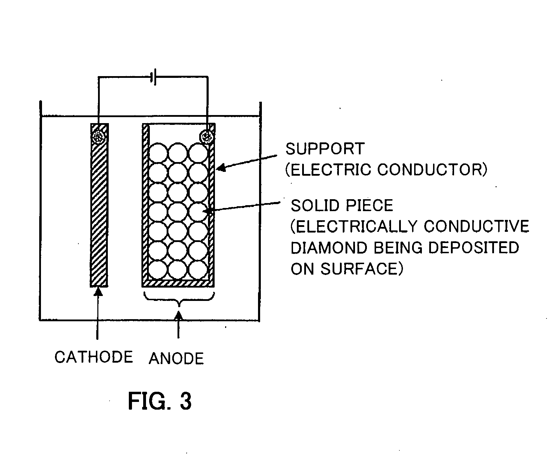

In the next place, in Fig. 3, an example of an arrangement of the electrode of the invention is shown. In Fig. 3, a surface of a solid piece is coated with electrically conductive diamond to form an electrode material, a plurality of the electrode materials is brought into contact with each other to form an electrode material assemblage, and furthermore the electrode material assemblage is supported by a electrically conductive support to form an electrode. In this example, the electrode according to the invention is used as an anode. As mentioned above, since the diamond coating is doped with a P-type impurity element, a diamond film is electrically conductive. Furthermore, the solid pieces of the respective electrode materials are in elastic contact with each other between ones that are adjacent to each other. Accordingly, an electric current from the support can be conducted as it is and can be used in an electrochemical processing of the liquid. Different from a case of forming a continuous film having a large area, an assembly of small area continuous coatings free from defect can be readily prepared by such coating.

Furthermore, when a plurality of solid pieces are gathered and held so as to come into contact with each other, a necessary and sufficient wetted area can be obtained.

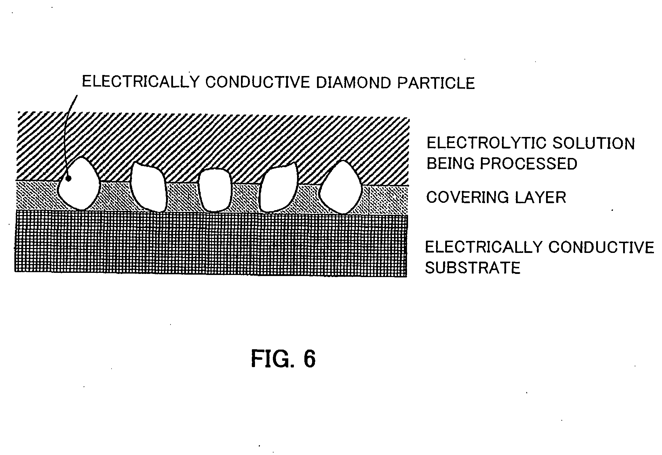

Still furthermore, another example of the electrode according to the invention, as mentioned above, comprises (1) an electrically conductive substrate, (2) a covering layer covering the electrically conductive substrate and (3) electrically conductive diamond particles fixed to the covering layer, each of the electrically conductive diamond particles being in partial contact with the electrically conductive substrate, another portion thereof being partially exposed on a surface of the covering layer. Fig. 6 is a sectional diagram showing an example of the electrode according to the invention.

Now, the electrically conductive substrate that is used in the invention, as long as the substrate has the electrical conductive properties and can bring electrically conductive diamond particles into contact to fix, is not restricted to a particular one. A metal such as gold or titanium, an electrically conductive organic polymer such as electrically conductive plastics or rubber, and an electrically conductive inorganic material such as electrically conductive ceramics, glass, carbon or the like can be cited. Among these, the metal is preferable from a viewpoint of assembling operation.

The electrically conductive diamond particle used in the invention, as long as the diamond particle is diamond having the electrical conductive properties, is not restricted to a particular one.

A magnitude of the electrically conductive diamond particles that are used in the invention, as long as they can be brought into contact with the electrically conductive substrate and fixed thereto, is not restricted to a particular one. For instance, one having an average particle diameter in the range of substantially 1 to 90 $\mu$m can be cited.

A general manufacturing method of diamond particles can be roughly divided into two means of a high-pressure synthesis method and a low-pressure synthesis method (vapor phase growth method). From a viewpoint of doping an impurity element to impart the electrical conductive properties, the low-pressure synthesis method by which the impurity element can be easily introduced is preferable. That is, the low-pressure synthesis method is advantageous in that when a gas containing a desired impurity is blended in a gas raw material the impurity element can be easily doped in the formed diamond. Thereby, the electrical conductive properties can be imparted to diamond which is intrinsically insulating material. Now, as the impurity elements being doped, boron, phosphorus, arsenic,' antimony, bismuth or the like can be cited. For instance, when a P-type electric conductor is prepared, boron is particularly preferable. Furthermore, a doping ratio, as long as it can impart the electrical conductive properties to diamond, is not particularly restricted. In the case of for instance boron, it is preferably doped in the range of several thousands to 10,000 ppm to diamond. As the electric conductivity of the conductivity-imparted diamond, though determined appropriately depending on the characteristics of the electrode that is used, for instance, 7,000 to 20,000 S/m can be cited. There is known example where electrically conductive diamond particles are prepared by means of an ultra-high pressure method, and thereby an electrode for industrial electrolysis is manufactured (for instance, http://www.jst.go.jp/giten/announce/result/res-11/res_11_139.pdf).

In the low-pressure synthesis method, for instance, with a mixture gas of methane and hydrogen as a raw material gas, for instance, under pressure of 20 to 50 Torr and a substrate temperature of 900°C, a diamond film can be formed on the substrate. Furthermore, in the low-pressure synthesis method, it is generally considered that a synthesis of a diamond film and a reaction where once generated diamond is etched by an action of a hydrogen radical to return to an initial hydrocarbon state simultaneously proceed. In the low-pressure synthesis method, a behavior of hydrogen plasma is important. In order to effectively combine the hydrogen plasma with the synthesis of diamond, two methods of a hot-filament CVD where a high temperature filament of 2000°C or more is disposed in a gaseous phase and microwave plasma CVD by which a microwave is imparted are industrially successfully used.

According to the low-pressure synthesis method, not only a continuous film can be formed on a substrate but also particulate electrically conductive diamond that is used in the invention can be manufactured.

For instance, when a direct current plasma CVD method is used to react for 5 hr, diamond particles (twin crystal) having a particle diameter of up to 100 $\mu$m can be manufactured (M. Otuka and A. Sawabe, *Diamond Thin Film,* Sangyotosho (1987), p. 131 to 132). When a doping gas such as diborane ($B_2H_6$) is added to a raw material gas that is supplied, boron that is an impurity element can be introduced in generated diamond particles. Since, when a reaction time is lengthened, a diamond particle can be grown largely, a particle diameter of the diamond can be altered when the reaction time is controlled. Thereby, electrically conductive diamond particle having a desired particle diameter can be manufactured.

As the covering layer that is used in the invention, as long as it can cover an electrically conductive substrate and fix electrically conductive diamond particles, there is no particular restriction. For instance, one that is constituted of an organic polymer and/or an inorganic material can be cited. As the organic polymer, plastics and rubbers can be cited. As the plastics, thermoplastic resins such as polyethylene, polypropylene, polystyrene, vinyl chloride, vinylidene chloride, a fluorinated resin, an acrylic resin, a polyvinyl acetate resin, a polyamide resin, an acetal resin, polycarbonate, polyphenylene oxide, polyester, polysulfone, polyimide and so on; and thermosetting resins such as a phenolic resin, a urea resin, a melamine resin, an alkyd resin, an unsaturated polyester resin, an epoxy resin, a silicon resin, a polyurethane resin and so on can be cited. Among these, thermoplastic resins such as a polyvinyl acetate resin, a polyimide resin and so on that can be used as an adhesive are preferable. Furthermore, as the rubbers, general-purpose rubbers such as natural rubber, polyisoprene rubber, butadiene rubber, styrenebutadiene rubber, butyl rubber, ethylene-propylene rubber and so on; special rubbers such as chroloprene rubber, acrylonitrile-butadiene rubber, hydrogenated nitrile rubber, chlorosulfonated polyethylene, epichlorohidrin rubber, chlorinated polyethylene, acrylic rubber, silicone rubber, fluorinated rubber, polyether based special rubber and so on; styrene-based, olefin-based, vinyl chloride-based, urethane-based, ester-based and polyamide-based thermoplastic elastomers; and photo-curable resins and electron beam-curable resins can be cited. Still furthermore, as the inorganic materials, ceramics, cement, glass and so on can be cited. The organic polymers and the inorganic materials may be used singularly or in a combination of at least two kinds thereof. Furthermore, the inorganic material and the organic polymer may be formed into a composite material thereof and used. Still furthermore, as the covering layer, a metal such as nickel or the like may be covered by use of the plating. The covering layer used in the invention is preferably made of a material of which specific resistance is larger than that of the insulating material or the electrically conductive diamond. When a metal is plated, a surface thereof is preferably covered with a material of which specific resistance is larger than that of the insulating material or the electrically conductive diamond.

A thickness of the covering layer used in the invention is determined appropriately depending on a particle diameter of the electrically conductive diamond particles that are fixed. Any thickness that allows fixing the electrically conductive diamond particles and exposing on a surface of the covering layer may be used.

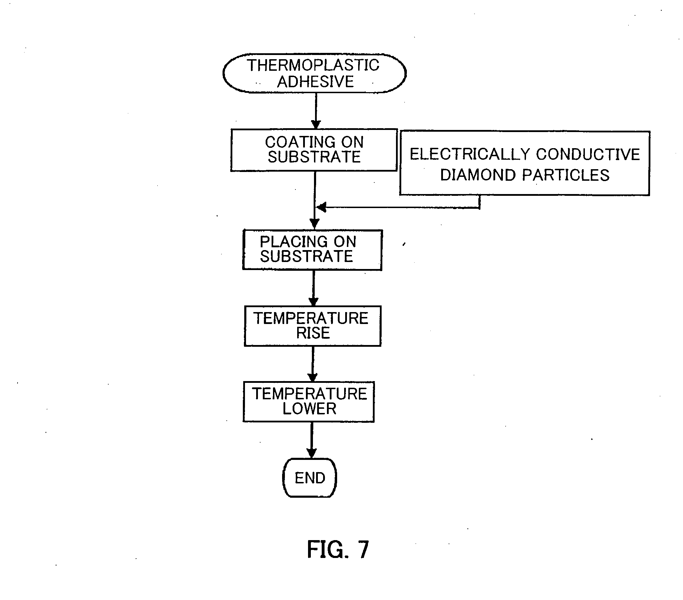

In the next place, a manufacturing method according to the invention of an electrode will be described. The electrode according to the invention, when a covering layer is made of a thermoplastic resin, a thermoplastic adhesive or a thermoplastic elastomer, can be manufactured according to a process as shown in Fig. 7. That is, a thermoplastic adhesive such as polyvinyl acetate is formed with a definite thickness on an electrically conductive substrate by use of a standard method such as a coating method, a lining method, a dipping method, a dripping method, a spin-coat method, a spraying method, a doctor blade method, or a baking method, followed by placing electrically conductive diamond particles thereon with a desired spacing, density and pattern. When the covering layer is heated to a predetermined temperature, the viscosity of the adhesive is lowered; accordingly, the diamond particles sediment in the adhesive to come into contact with a surface of the electrically conductive substrate. Thereafter, when the covering layer is cooled, the adhesive solidifies to fix the electrically conductive diamond particles to the covering layer, and thereby a covering layer strongly adhered to a surface of the electrically conductive substrate can be formed.

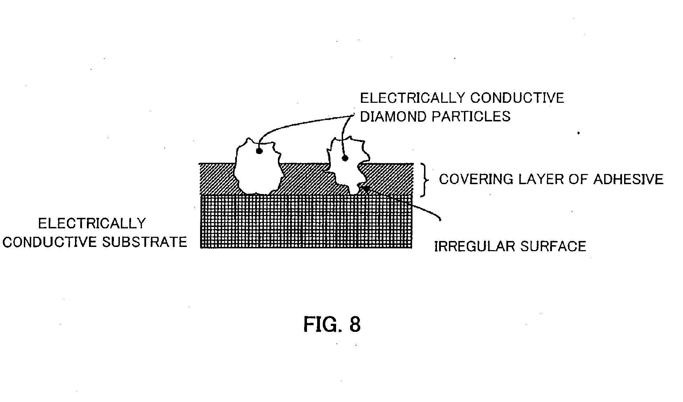

Here, the adhesive directly adheres to the electrically conductive diamond particles, and thereby the covering layer surrounds peripheries of irregularly formed particles and buries the particles therein (Fig. 8). The irregularities on a surface of the electrically conductive diamond particle engage with the covering layer (state similar to an anchor effect). As a result, the electrically conductive diamond particles are fixed in contact with a surface of the electrically conductive substrate. Here, when an amount of coated adhesive and a degree of temperature rise are controlled, a thickness of a cured covering layer can be controlled. By making use of this, as shown in Fig. 8, a relatively large portion of the electrically conductive diamond particles can be exposed outside of the covering layer. It goes without saying that as the adhesive, without restricting to polyvinyl acetate base one, one that is liquid at room temperature such as injection polyimide may be used.

Furthermore, in the case of the covering layer being made of the thermosetting resin, on the electrically conductive substrate, a thermosetting resin that is liquid for instance at room temperature is formed with a definite thickness and then placed with electrically conductive diamond particles thereon. At this time, since the resin is not cured, the electrically conductive diamond particles come into contact with the substrate as they are. Then, the covering layer is heated to cure the resin, and thereby the electrically conductive diamond particles are fixed to the covering layer.

Still furthermore, in the case of the covering-layer being made of a photo-curable resin or an EB-curable resin, after the resin is formed on the electrically conductive substrate with a definite thickness, electrically conductive diamond particles are placed thereon. At this time, since the resin is not cured, the electrically conductive diamond particles come into contact with the substrate as they are. Then, on the covering layer, light or an electron beam is irradiated to cure the resin, and thereby the electrically conductive diamond particles can be fixed to the covering layer.

Still furthermore, as a manufacturing method of an electrode, after electrically conductive diamond particles are directly placed on and brought into contact with an electrically conductive substrate, a covering layer is formed on a surface of the electrically conductive substrate, and thereafter the covering layer may be cured.

Furthermore, as another manufacturing method according to the invention of an electrode, for instance there is a technology that is used to fix abrasive grains on a surface of a dresser of a CMP (chemical mechanical polishing) machine. That is, electrically conductive diamond particles are directly or after pre-plating with Ni or the like tentatively placed on a surface of the electrically conductive substrate, followed by plating Ni or the like until a total thickness of 30 to 80% of a particle diameter of the diamond particles is attained, and thereby the electrically conductive diamond particles are fixed. Subsequently, a surface thereof is covered with an insulating material, and finally lightly polished so as to partially expose each of the electrically conductive diamond particles, and thereby an electrode according to the invention can be obtained. As a method of forming a covering layer for fixing the electrically conductive diamond particles, other than the above, various kinds of industrial surface covering methods that use an inorganic material such as ceramics, cement, or glass can be effectively used.

In the electrode according to the invention, individual electrically conductive diamond particles, even when these are disposed without coming into contact with each other, are in contact with the electrically conductive substrate; accordingly, the individual electrically conductive diamond particles are in electrical continuity with the electrically conductive substrate. It goes without saying that even when the electrically conductive diamond particles are in contact with each other the electrical action thereof is not at all altered. Accordingly, it can work as a submerged electrode as shown in Fig. 6.

A liquid processor according to the invention can be obtained when an electrode of an ordinary liquid processor such as a wastewater processor is replaced with the electrode according to the invention. The liquid processor according to the invention can be used in the same way as the ordinary liquid processor.

Furthermore, a liquid processing method according to the invention, though specifically described in examples, can be carried out by flowing an electric current to an electrode according to the invention, which is immersed in a liquid to be processed.

By use of the above-mentioned electrode according to the invention, inconveniences of huge area electrode in various electrochemical processes that use the electrically conductive diamond as an electrode can be alleviated. This will be outlined with reference to a case example below.

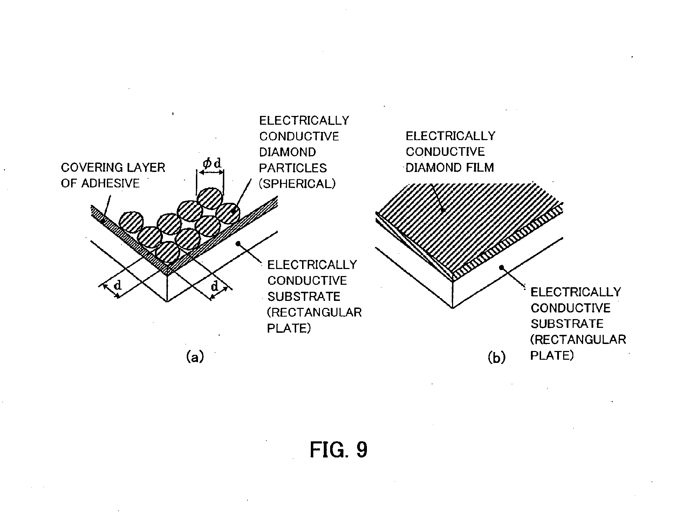

As an example, a case where electrically conductive diamond is fixed or coated on a surface of a rectangular electrode substrate will be studied. Fig. 9(a) shows an electrode according to the invention. On a rectangular planar electrically conductive substrate, spherical diamond particles having a diameter of d are arranged so as to come into contact with each other. Furthermore, a particle is fixed so that a portion buried within a covering layer of an adhesive and a portion exposed therefrom, respectively, have the same volumes, the exposed portion showing a semi-spherical shape. A substantial wetted surface area per apparent unit surface area of the substrate can be obtained from a formula below.

$$(1/d^2) \times [(1/2) \times 4\pi(d/2)^2] = \pi/2$$

On the other hand, Fig. 9(b) shows one obtained by coating the electrically conductive substrate having the same area as (a) with an electrically conductive diamond film. Accordingly, when substantial wetted areas of Figs. 9(a) and 9(b) are compared, (a) has an area substantially $\pi/2 \cong 1.6$ times that of the (b). That is, when electrodes having the same current density are compared, in an electrode according to the invention, an electrode size (area) can be reduced to substantially 1/1.6 that of an existing flat film-like electrode.

Furthermore, when the same electrode size and the same current density are assumed, in the electrode according to the invention, in comparison with the existing method, electric power of 1.6 times that of the existing method can be inputted. As a result, the efficiency and speed of a target electrochemical process can be improved accordingly.

In Fig. 9, when, in place of the spherical shape, an irregular shape abundant of surface irregularities is taken to relatively increase an exposed portion, a substantial wetted surface area can be further increased.

As mentioned above, in general, in the liquid processing and modification where an electrochemical reaction is a fundamental process, a position of reaction is limited to the vicinity of an electrode; accordingly, when a large volume/high-speed process is carried out, a larger electrode becomes inevitably necessary.

Accordingly, when the method according to the invention is used, the electrode can be suppressed or alleviated from becoming larger in size. That is, the advantage of the invention is practically very large.

Subsequently, a substrate that is used in another example of an electrode material according to the invention will be described.

A shape of a substrate used in the invention, as long as the shape is a columnar or tubular shape that allows coating a side surface with electrically conductive diamond, is not restricted to a particular one. Other than the columnar or tubular one, ones of which section has an elliptical or polygonal shape are included. However, the columnar one or tubular one is preferable.

A length in a longitudinal direction of the substrate used in the invention, though appropriately determined depending on a shape of a finally produced electrode or the like, is normally in the range of 100 to 3,000 mm.

Furthermore, a magnitude of a section of a substrate used in the invention, though appropriately determined depending on a shape of a finally produced electrode or the like, is normally in the range of 1 to 10,000 mm$^2$ by a sectional area.

As a material of the substrate that is used in the invention, as long as the material allows being coated with diamond, there is no restriction. For instance, molybdenum, niobium, iridium, rhenium, tantalum, tungsten, impurity-added silicon or the like can be cited. Among these, molybdenum and niobium can be cited as particularly preferable examples.

In the invention, a thickness of the diamond coating of the electrode material that uses the substrate, as long as the thickness can exert the performance when used in the electrode, is not particularly restricted. However, the thickness is normally in the range of 0.1 to 20 $\mu$m, preferably in the range of 0.5 to 15 $\mu$m and more preferably in the range of 1 to 10 $\mu$m. In particular, when the film thickness is 0.5 $\mu$m or more, furthermore 1 $\mu$m or more, as will be described below, the lifetime thereof can be drastically lengthened.

A liquid processor according to the invention can be obtained when an electrode of an ordinary liquid processor such as a wastewater processor is replaced with the electrode according to the invention. The liquid processor according to the invention can be used in the same way as the ordinary liquid processor.

Furthermore, a liquid processing method according to the invention, which will be specifically described in examples, can be carried out by flowing an electric current to an electrode according to the invention, which is immersed in a liquid to be processed.

By use of the electrode according to the invention described above, damages of the diamond film due to the thermal stress can be alleviated. This will be outlined with reference to a case example below.

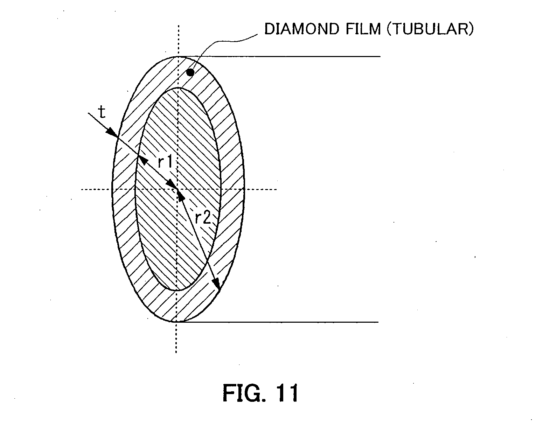

Unlike an ordinary diamond electrode where only one surface of the substrate is coated, when a periphery of a side surface of a columnar or tubular substrate is coated, from a viewpoint of avoiding damages on a film due to difference of thermal expansions of the substrate and diamond film, a significant effect can be exerted. As an example, a model where a periphery of a slender columnar substrate shown in Fig. 11 is coated with a diamond film will be considered.

It is assumed that, a CVD process is used at 800°C or higher to deposit a film as shown in Fig. 11, and then cool this to room temperature. When the electrode is used in an electrochemical process, in order to supply predetermined electric power from a substrate to a diamond film, the substrate necessarily has the electrically conductive properties. For instance, when a metal is used as a material of the substrate, the thermal expansion coefficient thereof is substantially $1 \times 10^{-5}$/deg that is substantially ten times larger than the thermal expansion coefficient of diamond. Accordingly, during the cooling, the metal substrate contracts relatively further. Now, by further severely setting the difference of the thermal expansions, it is assumed that the thermal expansion of the diamond tube is zero and only the substrate contracts as the temperature is lowered.

Here, as a model, a model where a diamond film is considered a thin single tube and from the inside thereof virtual negative pressure that exerts an effect equivalent to the thermal contraction of the substrate is generated is assumed to be substituted, and the stress applied at this time on the thin tube is calculated.

When stresses in a peripheral direction, radial direction and axial direction, which are generated on an inner periphery surface of a tube shown in Fig. 11 are taken as $\sigma_t$, $\sigma_r$ and $\sigma_z$, respectively, and internal pressure is taken P (<0), from formula of mechanics of materials, three stresses can be described with equations (1) through (3) below.

$$\sigma_t = [r_1^2 P / (r_2^2 - r_1^2)] \times [(r_2^2/r_1^2) + 1] \qquad (1)$$

$$\sigma_r = -P \qquad (2)$$

$$\sigma_z = 0 \; [\because \text{ a plane stress problem is assumed}] \qquad (3)$$

Here, $r_1$ and $r_2$, respectively, are inner and outer diameters (Fig. 11) of a tube being considered. Though described below, in the equations (1) through (3),

$$|\sigma_t| \gg |\sigma_r|, \ |\sigma_z| \qquad\qquad (4)$$

works out; accordingly, only $\sigma_t$ is taken up as a target of study of strength. A ratio of inner diameter to outer diameter is defined as $R \equiv r_1/r_2$.

When the equation (1) is rewritten with R, an equation (5) below is obtained.

$$\sigma_t = (1 + R^2)P/(1 - R^2) \qquad\qquad (5)$$

On the other hand, a displacement $u_1$ in a radial direction at an inner periphery of the tube becomes like an equation (6) below from formula of mechanics of materials.

$$U_1 = (Pr_1/E) \times \{[1 + (r_1/r_2)^2]/[1 - (r_1/r_2)^2] + 1/m\} \quad (6)$$

Here, E and m, respectively, denote the modulus of longitudinal elasticity and Poisson number of diamond.

On the other hand, an intrinsic displacement of the substrate (column) in a radial direction, when the thermal expansion coefficient of the substrate is represented with $\lambda$ and the temperature difference due to cooling is represented with $\Delta T°C$, becomes $r_1\lambda\Delta T$. This is equal with $u_1$ of the equation (6); accordingly, a equation (7) below works out.

$$u_1 = - r_1\lambda\Delta T \qquad\qquad (7)$$

When equation (6) and (7) are equated, P can be obtained and a equation (8) below works out.

$$-P[(1 + R^2)/(1 - R^2) + 1/m] = E\lambda\Delta T \qquad\qquad (8)$$

As a result, from equation (5)/ equation (8), the stress in the radial direction becomes a form of a equation (9) below.

$$\sigma_t = [-R^2E\lambda\Delta T(1/R^2 + 1)]/\{(1 - R^2)[(1 + R^2)/(1 - R^2) + 1/m]\}$$

$$\therefore \ \sigma_t = - [(1 + R^2)E\lambda\Delta T]/[1 + R^2 + (1 - R^2)/m] \qquad (9)$$

From the equation (9), the stress in a peripheral direction, which dominates the rupture strength of the tube, can be expressed not with an absolute magnitude of the tube but with a function only of a ratio of inner diameter and outer diameter.

Now, when a refractory metal molybdenum (Mo) is taken as a metal species of the substrate, the thermal expansion coefficient $\lambda$ thereof is $5.44 \times 10^{-6}$/deg, and the modulus of longitudinal elasticity E and the Poisson number m of diamond, respectively, are E=500 GPa = $5.1 \times 10^4$ kgf/mm$^2$ and m=5. The modulus of longitudinal elasticity E of a diamond film varies depending on the film density and distributes in the range of substantially 800 to 1,200 GPa. A diamond film being studied contains a large amount of impurity (doping element) and includes defects. Accordingly, it is difficult to specify an accurate value of the modulus of longitudinal elasticity. However, here, the modulus of longitudinal elasticity is estimated smaller than the above-mentioned published value and taken at E = 500 GPa.

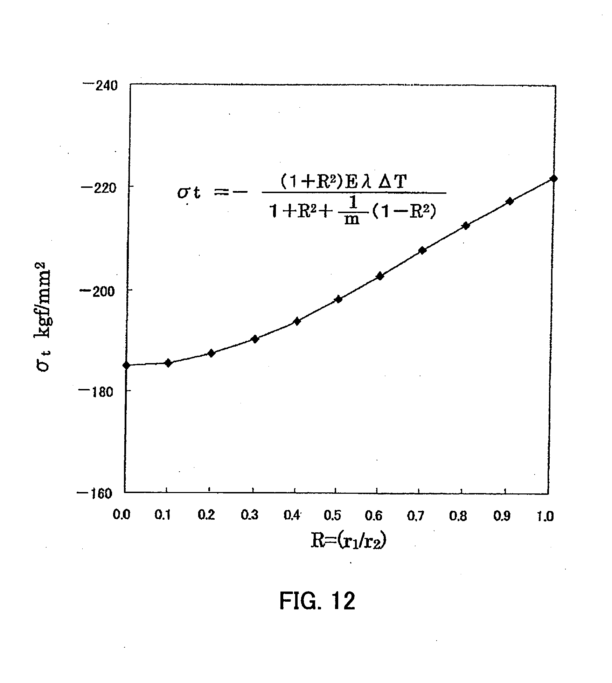

When the temperature difference $\Delta T = 800°C$ is taken, the relationship between the ratio of internal diameter to outer diameter and the stress in a peripheral direction becomes as shown in Fig. 12. As obvious from Fig. 12, $\sigma_t$ is negative, namely, compression stress over an entire region of R, monotonically increases in its absolute value as the $r_1/r_2$ increases, and comes near -222 kgf/mm$^2$ as the $r_1/r_2$ approaches 1.

From Fig. 12, it is found that even when a thickness t of the tube shown in Fig. 11 becomes extremely thin an absolute value of the stress in a peripheral direction does not increase without limit. Accordingly, the tube is stable in the strength to the thermal stress.

Furthermore, the hardness of diamond is in the range of 7,000 to 10,000 kgf/mm$^2$ and the compression strength thereof is 887 kgf /mm$^2$ (at the maximum 1,687 kgf/mm$^2$). Since the values are far larger than the absolute values of the stress (s 222 kgf/mm$^2$) obtained by the above calculation, the film strength is sufficient and can sufficiently withstand the thermal stress due to cooling. The foregoing conclusion can be for the first time obtained by continuously and uniformly coating an entire periphery of a columnar or tubular substrate with a diamond film.

Accordingly, even when a diamond film is formed by use of a high temperature process such as the CVD and cooled to room temperature, the film is hardly damaged mechanically due to the thermal stress.

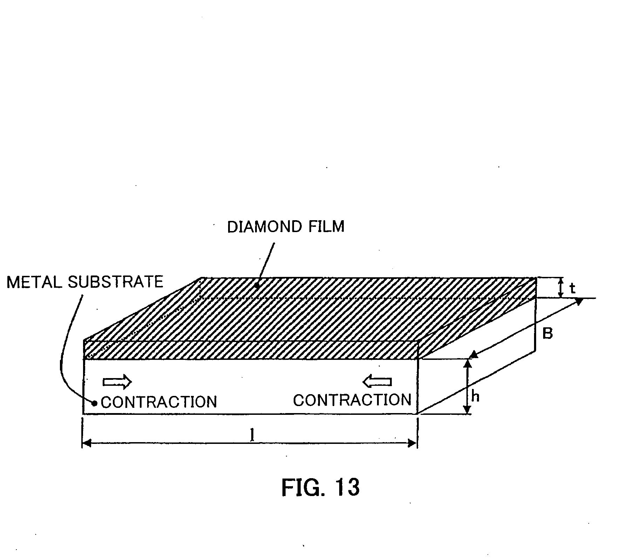

On the other hand, when a case where a diamond thin film is coated on a surface of a straight or planar substrate (Fig. 13) is considered, a metal material, owing to large thermal expansion coefficient thereof, exerts a large compression effect mainly in a longitudinal direction of the diamond film during the cooling. Furthermore, unlike the case of the invention, there is a large disadvantage in that the compression stress exerting in a longitudinal direction of the film tends to cause damage or peeling due to the buckling of the film itself. In particular, when the adhesive force between the film and substrate is poor, the tendency is considered to become remarkable.

In Fig. 13, as a model, a case where a diamond thin film having a length 1, a width B and a thickness t coats a rectangular substrate will be considered. In Fig. 13, during the cooling, a metal substrate contracts as shown with an arrow mark in a longitudinal direction. Accordingly, strong compression force is applied on the diamond film, resulting in causing the buckling when the adhesiveness with the substrate is weak.

A limiting weight F of the buckling according to formula of mechanics of materials becomes a equation (10) below.

$$F \;=\; 4\pi^2 EI/1^2 \qquad\qquad\qquad\qquad\qquad (10)$$

Here, I denotes second moment of area of the film.

When the bending in a peeling direction is considered in equation (10), since I = Bt$^3$/ 12 , a equation (11) below works out.

$$F \;=\; 4\pi^2 EBt^3/121^2 \qquad\qquad\qquad\qquad (11)$$

Now, as an example, when a magnitude substantially same as an 8-inch wafer is considered, in Fig. 13, 1= 200 mm, B = 50 mm, t = 20 $\mu$m = 2 $\times$ 10$^{-2}$ mm and E = 5.1 $\times$ 10$^4$ kgf/mm$^2$ are taken, and when these are inserted in the equation (11), F = 1.68 $\times$ 10$^{-3}$ kgf is obtained. That is, it goes without saying that the limiting weight F becomes a very small value. With Mo taken as a material of the substrate similarly to the above, a thickness of material h = 1 mm and temperature difference $\Delta$T = 800°C, when a weight necessary for compensating the strain due to the thermal contraction is taken F*, F* = $\lambda\Delta$T $\times$ E$_M$ $\times$ h $\times$ B, and

$$F^* \;\cong\; 5.44 \times 10^{-6}/\text{deg} \times 800 \times 3.34 \times 10^4 \times 1 \times 50 =$$

$$7{,}268 \text{ kgf is obtained.}$$

Here, the E$_M$ is the modulus of longitudinal elasticity of Mo and

$$E_M \;=\; 3.27 \times 10^{11} \text{ N/m}^2 \;=\; 3.34 \times 10^4 \text{ kgf/mm}^2.$$

Accordingly, the electrically conductive diamond film shown in Fig. 13 is subjected to remarkably large compression force corresponding to a value (= 800 $\times$ 5.44 $\times$ 10$^{-5}$ $\cong$ 0.4%) identical as the contraction strain of the Mo substrate. Accordingly, when there is a portion where the adhesiveness is only slightly weaker, deformation similar to the buckling is generated therefrom, thus easily causing the peeling or the damage of the film itself. Furthermore, when, with non-uniform stress generated on the film, a long-term use thereof is carried out in a state dipped in a liquid, it is assumed that an intrusion of liquid inward the film and electrochemical corrosion are likely to occur at very high probability. As a result, as the time goes under a use environment, the film may be damaged.

However, when a mode according to the invention is taken, as mentioned above, the risk of mechanically damaging the film or corrosion or deterioration due to the liquid during the long-term use thereof can be drastically lowered, and thereby the structural healthiness can be remarkably improved.

Examples

In what follows, the invention will be described with reference to examples. However, the invention is not restricted to the examples.

(Example 1)

<Manufacture of Electrode Material>

As a solid piece, a Mo sphere having a diameter of 10 mm was used. On a surface of the Mo sphere, by use of microwave plasma CVD, electrically conductive diamond was deposited until a thickness of 10 $\mu$m was obtained, and thereby an electrode material was produced. Boron was used as a dopant and doped at a ratio of 10,000 ppm to diamond, and thereby electrically conductive diamond was obtained.

(Example 2)

<Manufacture of Electrode Material Assemblage and Electrode>

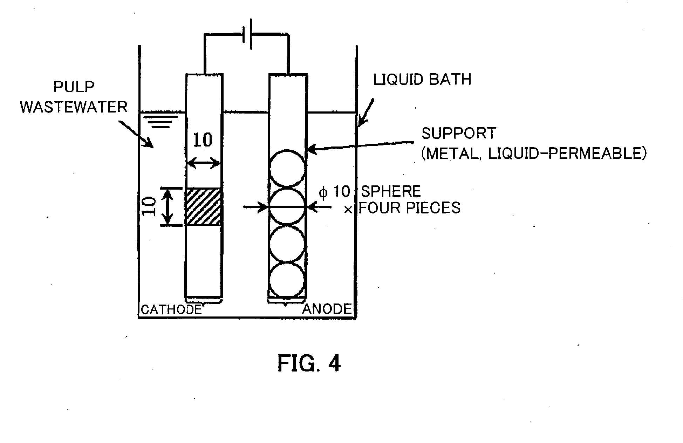

In the next place, as shown in Fig. 4, four of the electrode materials obtained in Example 1 were packed in a square columnar support, a bottom surface of which has a side of 10 mm and thereby an electrode was prepared. The electrode materials are in contact with each other as shown in Fig. 4 and thereby an electrode material assemblage is formed. The support used here, which is made of titanium so as to have the electrically conductive properties, and is formed with network structure, so as to have the liquid permeability.

(Example 3)

<Cleaning Test of Wastewater>

With the electrode manufactured in example 2, a cleaning test of wastewater exhausted from a paper pulp manufacturing process was carried out.

As waste liquid from the paper pulp manufacturing process, there are three of (1) cooking waste liquid that dissolves a lot of lignin or hemicellulose contained in wood, (2) non-bleached screen wastewater and (3) bleached wastewater. This time, (3) bleached wastewater was used. That is, liquids sampled from a chlorination stage and an alkali extraction stage in a kraft pulp bleaching plant were mixed at a volume ratio of 1: 1 and used as a sample liquid.

A test was carried out in such a manner that as shown in Fig. 4 a sample liquid of 100 $cm^3$ was poured into a liquid bath, and, with an electrode produced in example 2 as an anode and a square columnar titanium of which bottom surface has a side of 10 mm as a cathode, a current density of 50 mA/$cm^2$ was kept. The value of 50 mA/$cm^2$ is a value close to the limiting current density of an ordinary electrode.

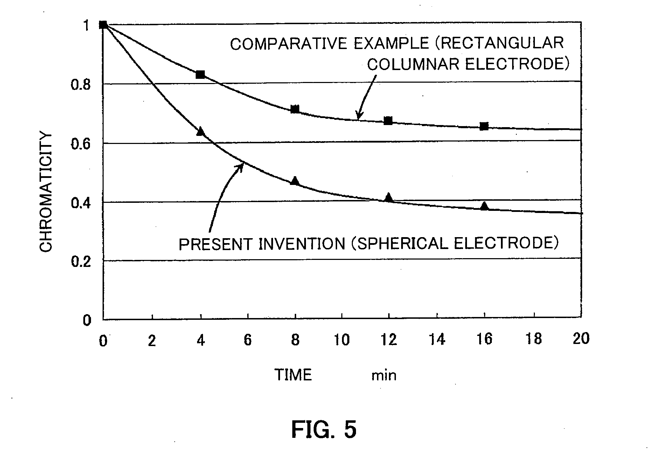

At the initial stage of the sample, the pH was 2.33, the chromaticity was 3300 degree and the chemical oxygen demand (COD) was 1830 mg/l. With the initial chromaticity of the sample liquid assigned to 1, the variation of the chromaticity with the energizing time was investigated. Results are shown in Fig. 5.

Furthermore, as a comparative example, a cleaning test was carried out under similar conditions as example 3 except that, in place of the electrode according to the invention, as an anode, a square columnar electrode where a surface of a square columnar molybdenum of which bottom surface has a side of 10 mm was coated with electrically conductive diamond having a thickness of 10 $\mu$m. Results are shown in Fig. 5.

From Fig. 5, it is found that in the electrode according to the invention, in comparison with the rectangular columnar electrode, decolorization due to decomposition of contained organic materials proceeds faster, that is, a cleaning speed is faster.

(Example 4)

<Manufacture of Electrode>

Under the conditions below, by means of a low-pressure synthesis method, electrically conductive diamond particles having an average particle diameter of 0.2 mm were obtained.

That is, by use of DC plasma CVD, at a substrate temperature of 900°C and under pressure of 195 Torr, with a reaction gas containing 5% of $CH_4$ and 0.3% of $B_2H_6$ in hydrogen, a reaction was carried out for 11 hr to manufacture.

As an electrically conductive substrate, a titanium plate having a magnitude of 100 mm $\times$ 300 mm was used. On the titanium plate, a modified epoxy resin was coated as a covering layer with a thickness of 30 $\mu$m. On the electrically conductive substrate, electrically conductive diamond particles were placed at the density of 25 particles/mm$^2$, and then heated at 80°C for 1 hr to bring the electrically conductive diamond particles into contact with and fix to the electrically conductive substrate, and further cooled to room temperature over 2 hr, and thereby an electrode was obtained.

(Example 5)

<Preparation of Liquid Processor>

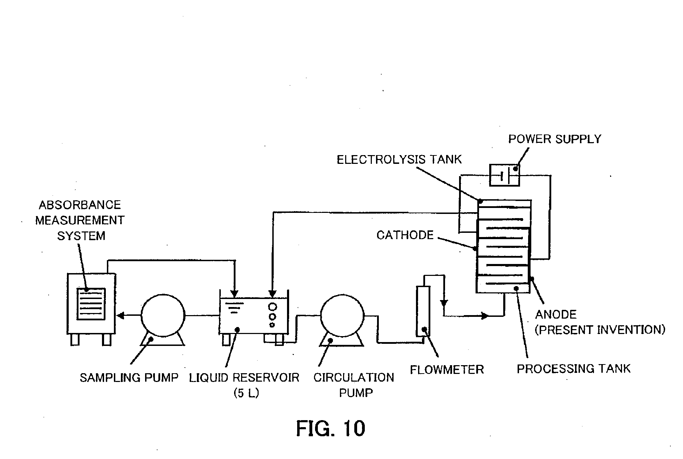

A liquid processor having a process flow shown in Fig. 10 was prepared. As the electrode, five pieces of the electrodes manufactured in example 4 were used.

(Example 6)

<Wastewater Processing>

By use of the liquid processor prepared in example 5, a sample liquid sampled from seeped wastewater at a waste landfill was oxidized, and thereby an effect of decomposing organic materials to decolorize was confirmed. The processing was carried out continuously for 20 hr with the current density at an electrode surface fixed at a nominal value of 50 mA/cm$^2$. An example of results is shown in Table 2. For comparison, results of processing methods according to other existing methods, that is, an activated sludge process and a flocculation method, are shown together.

From Table 2, in the processing with the electrode according to the invention, from the viewpoint of removal rate to the seeped wastewater (raw water), the chromaticity, COD and BOD, respectively, become 92, 74 and 88%. That is, the water quality target of a final effluent was satisfied.

Furthermore, as a comparative example, with an electrode where on a substrate that has the same size and was operated at the same current density and duration, flat film-like electrically conductive diamond was formed (deposited up to a thickness of 20 $\mu$m), the processing was carried out. Table 3 shows a comparison under the conditions same as that of Table 2.

As obvious from Table 3, the removal rates due to comparative example 3 to the raw water were 74, 51 and 57%, respectively, for the chromaticity, COD and BOD. That is, these are very low relative to that (92, 74 and 88% in the same order) of the process according to the invention and only 80, 69 and 65%, respectively, were achieved to the process according to the invention. This is considered caused owing to as mentioned above substantial wetted areas of both electrodes being largely different. It is found that the electrode according to the invention is apparently large in the practical effect.

Table 2 Results of Processing of Wastewater Seeped out of Waste Landfill

| Index of liquid quality | Raw water | Active sludge process (Comparative example 1) | Flocculation process (Comparative example 2) | Electrolysis process (Present invention) |
|---|---|---|---|---|
| PH | 8.2 | 8.5 | 7.6 | 7.5 |
| Chromaticity (degree) | 2,005 | 2,150 | 770 | 155 |
| COD (mg/L) | 460 | 308 | 185 | 121 |
| BOD (mg/L) | 165 | 33 | 9 | 19 |

Table 3 Results of Wastewater Processing Owing to Difference of Shapes of Diamond Electrode

| Index of liquid quality | Raw water | Particle-fixed substrate electrode (Present invention) | Flat film-like electrode (Comparative example 3) |
|---|---|---|---|
| PH | 8.1 | 7.5 | 7.9 |
| Chromaticity (degree) | 2,000 | 155 | 530 |
| COD (mg/L) | 457 | 121 | 226 |
| BOD (mg/L) | 162 | 19 | 69 |

(Example 7)

<Manufacture of Electrode Material>

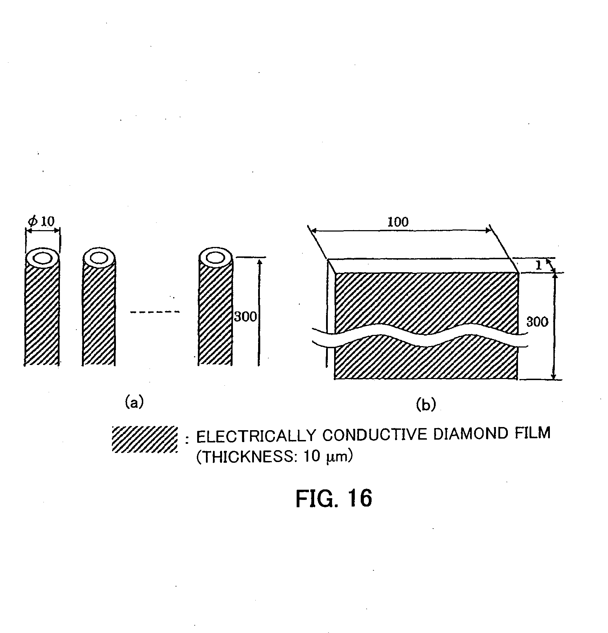

With a Mo round-bar having a diameter of 10 mm and a length of 300 mm as a substrate, by use of the microwave plasma CVD, electrically conductive diamond having a thickness of 10 $\mu$m was coated, and thereby an electrode material was obtained (Fig. 16 (a)). Reaction conditions at this time were as follows. That is, substrate temperature: 800°C, reaction gas: 2% of $CH_4$ and 0.35% of $B_2H_6$ in hydrogen, pressure: 50 Torr, reaction time: 2.5 hr, and microwave output: 0.5 kW.

(Example 8)

<Manufacture of Electrode>

With nine pieces of the electrode materials obtained in example 7, these were assembled with a supporting member to form an electrode material assemblage, and thereby an electrode was prepared.

(Example 9)

<Preparation of Liquid Processor>

With the electrode obtained in example 8, a liquid processor having a process flow shown in Fig. 10 was prepared.

(Example 10)

<Processing of Dyeing Wastewater>

By use of the liquid processor prepared in example 9, a decolorization test of the dyeing wastewater was carried out. The decolorization is known sufficiently effected not by complete decomposition and removal of organic materials but by cleaving a conjugated double bond of a solute.

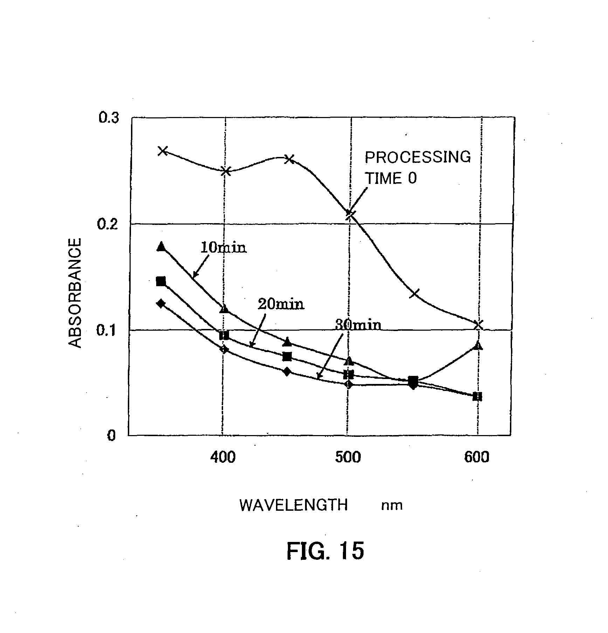

Fig. 15 shows a variation with time of the absorbance of the dyeing wastewater according to the invention in a form of wavelength spectrum.
The dyeing wastewater used in the experiment was one (initial transparency: 4.6 or less, COD: 365 mg/L and pH: 6.9) sampled from an overflow from a flocculation tank of an actual plant, and had a walnut color owing to suspended matters.
In the process, an electrolysis operation was carried out up to 30 min at the maximum. During the operation, a color tone of the wastewater was gradually thinned from walnut color at the initial, and after the processing for 20 min substantially complete decolorization was achieved.
The electrolysis process shown in Fig. 15 shows a case when electric power was inputted 4 Ah/L by a unit volume of liquid. Incidentally, since a voltage between electrode plates is substantially 8V, the integral power consumption by a liquid volume of 1 $m^3$ becomes 32 kWh, and power charge becomes substantially 320 yen. It is found that the decolorization was carried out efficiently.

(Example 11)

<Evaluation of Behavior of Film Thickness with Time>

As a lifetime evaluation, the electrode obtained in example 8 was energized under the conditions (acceleration conditions) where the current density is 1 A/cm$^2$, which is equivalent to 20 times a normal value, and the dyeing wastewater was continuously supplied to perform an electrolysis process. At this time, a decrease in the film thickness and a situation of damage of the film were measured.

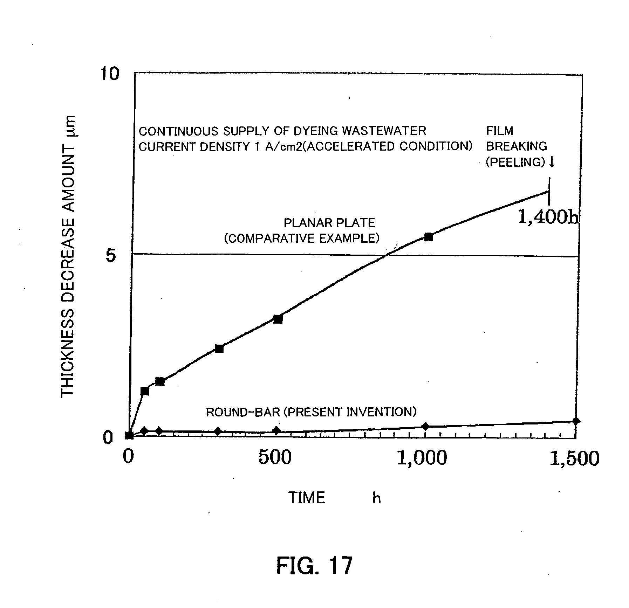

As a comparative example, in place of the electrode according to the invention, three rectangular planar electrodes that are shown in Fig. 16(b) and have a thickness of 1 mm, a width of 100 mm and a length of 300 mm were used. A thickness of an electrically conductive diamond film that coats a substrate was 10 μm for both of example and comparative example, and electrode surface areas were 848 cm$^2$ and 900 cm$^2$, respectively, that is, substantially equal. Results are shown in Fig. 17.

As obvious from Fig. 17, while the electrode according to the invention is estimated to have the lifetime (extrapolated value) of 30,000 hr or more, in comparative example a thickness reduction is rapidly caused. In addition, since, at 1,400 hr, film damage (peeling) occurred, the electrode according to comparative example is judged unsuitable.

(Example 12)

<Measurement of Film Thickness and Lifetime>

As mentioned above, according to the invention, even when a film thickness becomes very thin, an increment of the stress in a peripheral direction is small. Accordingly, a risk of mechanically damaging the film is very low. However, owing to experiments of the inventors, it was found that when a film thickness is thinner than a definite value, there is an inconvenience in that the lifetime of the film as a submerged electrode becomes shorter.

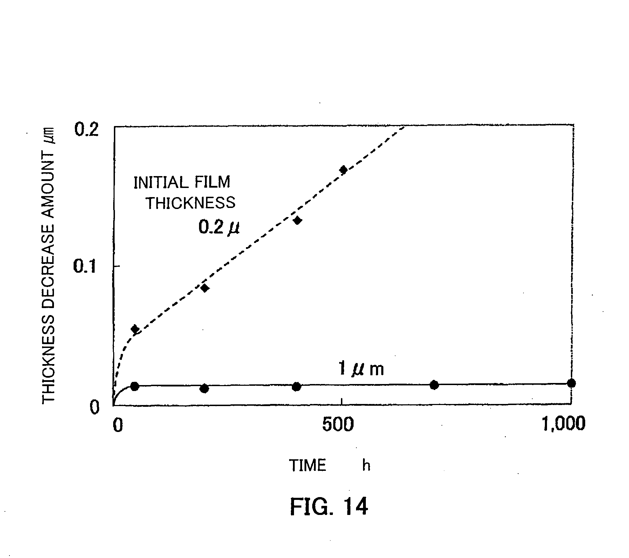

Specifically, in the case of a film thickness being less than 1 μm, furthermore, less than 0.5 μm, when wastewater to be processed is highly concentrated one or the current density is high, in some cases, the lifetime of the film becomes less than substantially 10 days. This is considered due to corrosion and deterioration of the film owing to an electrolytic solution or oxidation of the diamond film itself due to an action of OH radicals abundantly generated owing to an active electrochemical reaction. Fig. 14 compares decreasing behaviors of film thickness with time when a wastewater process is carried out similarly to example 10 with electrodes according to the invention, of which initial film thicknesses of the electrically conductive diamond are 0.2 and 1 μm.

As obvious from Fig. 14, when the electrode is used under the conditions of an ordinary wastewater processing, one of which initial film thickness is 1 μm, even after 1,000 hr of test, exhibited a decrease in a thickness only less than 0.02 μm. On the other hand, in one of which initial film thickness is 0.2 μm, after at best substantially 700 hr of test, an entire thickness is assumed consumed; accordingly, the lifetime becomes very short. This is considered because, when a film thickness is less than a necessary thickness, owing to structural defects inevitably generated during the deposition, the film is directly corroded with a liquid (damage and deterioration due to attack or corrosion by actively generated OH radicals).

On the other hand, in the case of a film thickness being 1 μm, since a coating thickness is sufficient, openings due to defects are coated and repaired by a subsequent deposition, and thereby defects are closed. As a result, the risk of being subjected to the corrosion due to a surrounding liquid in use is considered extremely lowered. Accordingly, the minimum thickness of the film is set at substantially 0.5 μm or more, and preferably at 1 μm or more.

**Claims**

1. An electrode material, wherein a solid piece that has a magnitude of 5 to 60 mm is coated with electrically conductive diamond.

2. The electrode material according to claim 1, wherein a thickness of a coating of the electrically conductive diamond is 2 to 20 μm.

3. The electrode material according to claim 1 or 2, wherein the solid piece is a block object or a linear object.

4. The electrode material according to claim 3, wherein the block object comprises at least one selected from a group consisting of a particulate object, a beads-like object, a spherical object and a hornlike object.

5. The electrode material according to claim 3, wherein the linear object comprises at least one selected from a group consisting of a fiber-like object, a string-like object, a steel-like object, a cord-like object and a bar-like object.

6. The electrode material according to any one of claim 1 through 5, wherein the solid piece comprises at least one selected from a group consisting of molybdenum, niobium, iridium, rhenium, tantalum, tungsten and silicon.

7. An electrode material assemblage comprising at least two of the electrode materials according to any one of claims 1 through 6, wherein one electrode material is in contact with at least one of other electrode materials.

8. An electrode comprising an electrode material assemblage according to claim 7.

9. An electrode, wherein the electrode material assemblage according to claim 7 is supported by a support.

10. The electrode according to claim 9, wherein the support is electrically conductive.

11. An electrode comprising:

(1) an electrically conductive substrate;
(2) a covering layer covering the electrically conductive substrate; and
(3) electrically conductive diamond particles fixed to the covering layer, wherein each of the electrically conductive diamond particles is partially brought into contact with the electrically conductive substrate and another portion of the each of the electrically conductive diamond particles is partially exposed on a surface of the covering layer.

12. The electrode according to claim 11, wherein the covering layer is made of an insulating material.

13. The electrode according to claim 11 or 12, wherein the covering layer is made of an organic polymer and/or an inorganic material.

14. The electrode according to claim 13, wherein the organic polymer is plastics and/or rubber.

15. The electrode according to claim 13 or 14, wherein the inorganic material is at least one selected from a group consisting of ceramics, cement and glass.

16. The electrode according to any one of claims 11 through 15, wherein electrically conductive diamond particles are manufactured by use of a low-pressure synthesis method.

17. The electrode according to any one of claims 11 through 16, wherein the electrode is a submerged electrode that is used in liquid.

18. A liquid processor comprising an electrode according to any one of claims 11 through 17.

19. A method of processing a liquid **characterized by** using the electrode according to any one of claims 11 through 17.

20. A method of manufacturing an electrode comprising:

(1) forming a covering layer on a surface of an electrically conductive material;
(2) placing electrically conductive diamond particles on the covering layer;
(3) bringing the electrically conductive diamond particles into contact with an electrically conductive substrate: and
(4) curing the covering layer to fix the electrically conductive diamond particles to the covering layer.

21. The method according to claim 20, wherein the covering layer is made of a thermoplastic resin and/or a thermoplastic elastomer, the step (3) is carried out by raising a temperature, and the step (4) is carried out by lowering a temperature.

22. The method according to claim 20, wherein the covering layer is made of a thermosetting resin and the step (4) is carried out by raising a temperature.

23. A method of manufacturing an electrode comprising:

(1) bringing electrically conductive diamond particles into contact with an electrically conductive substrate;
(2) forming a covering layer on a surface of an electrically conductive material; and
(3) curing the covering layer to fix the electrically conductive diamond particles to the covering layer.

24. The method according to claim 23, wherein the covering layer is made of a thermoplastic resin and/or a thermoplastic elastomer, the step (3) is carried out by lowering a temperature.

25. The method according to claim 23, wherein the covering layer is made of a thermosetting resin and the step (3) is carried out by raising a temperature.

26. An electrode material, wherein an entire side surface of a columnar or tubular substrate is coated with electrically conductive diamond.

27. The electrode material according to claim 26, wherein a thickness of the electrically conductive diamond is 0.5 $\mu$m or more.

28. The electrode material according to claim 26, wherein a thickness of the electrically conductive diamond is 1 $\mu$m or more.

29. An electrode material assemblage comprising at least two of the electrode materials according to any one of claims 26 through 28, wherein one electrode material is in electrical contact with at least one of other electrode materials.

30. An electrode comprising an electrode material according to any one of claims 26 through 28 and/or an electrode material assemblage according to claim 29.

31. The electrode according to claim 30, wherein the electrode is a submerged electrode that is used in liquid.

32. A liquid processor comprising an electrode according to claim 30 or 31.

33. A method of processing liquid, **characterized by** using the electrode according to claim 30 or 31.

DIAMOND CRYSTAL
DOPED WITH BORON

DIAMOND FILM

ELECTRICALLY CONDUCTIVE SUBSTRATE
(METAL OR INSULATING MATERIAL DOPED WITH IMPURITY)

FIG. 1

HOT FILAMENT

DEPOSITION
CHAMBER

HYDROCARBON GAS
+ HYDROGEN GAS,
AND SO ON

SOLID PIECE

SUSCEPTOR

HEATER

TO VACUUM PUMP

FIG. 2

FIG. 3

FIG. 4

FIG. 5

ELECTRICALLY CONDUCTIVE DIAMOND PARTICLE

ELECTROLYTIC SOLUTION
BEING PROCESSED

COVERING LAYER

ELECTRICALLY CONDUCTIVE
SUBSTRATE

FIG. 6

THERMOPLASTIC
ADHESIVE

COATING ON
SUBSTRATE

ELECTRICALLY CONDUCTIVE
DIAMOND PARTICLES

PLACING ON
SUBSTRATE

TEMPERATURE
RISE

TEMPERATURE
LOWER

END

FIG. 7

ELECTRICALLY CONDUCTIVE
DIAMOND PARTICLES

COVERING LAYER OF ADHESIVE

ELECTRICALLY
CONDUCTIVE SUBSTRATE

IRREGULAR SURFACE

FIG. 8

COVERING LAYER
OF ADHESIVE

ELECTRICALLY
CONDUCTIVE
DIAMOND
PARTICLES
(SPHERICAL)

ELECTRICALLY
CONDUCTIVE
DIAMOND FILM

$\phi$d

d

d

ELECTRICALLY
CONDUCTIVE
SUBSTRATE
(RECTANGULAR
PLATE)

ELECTRICALLY
CONDUCTIVE
SUBSTRATE
(RECTANGULAR
PLATE)

(a)

(b)

FIG. 9

FIG. 10

DIAMOND FILM (TUBULAR)

t

r1

r2

## FIG. 11

$$\sigma t = - \frac{(1+R^2)E\lambda\,\Delta T}{1+R^2+\frac{1}{m}(1-R^2)}$$

FIG. 12

FIG. 13

FIG. 14

FIG. 15

φ10

300

100

1

300

(a)                                              (b)

: ELECTRICALLY CONDUCTIVE DIAMOND FILM
(THICKNESS: 10 μm)

FIG. 16

FIG. 17

<div align="center">

**INTERNATIONAL SEARCH REPORT**

</div>

| International application No. |
| --- |
| PCT/JP2004/011522 |

| A. CLASSIFICATION OF SUBJECT MATTER |
| --- |
| Int.Cl$^7$  C25B11/12, C02F1/461 |
| |
| According to International Patent Classification (IPC) or to both national classification and IPC |

| B. FIELDS SEARCHED |
| --- |
| Minimum documentation searched (classification system followed by classification symbols) |
| Int.Cl$^7$  C25B11/12, C25B11/02, C02F1/461, C01B31/06 |

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2003-155588 A  (Permelec Electrode Ltd.), 30 May, 2003 (30.05.03), Par. Nos. [0011] to [0022] (Family: none) | 1-3,5,6, 11-19 |
| X | US 6306270 B1  (CSEM Centre Suisse d'Electronique et de Microtechnique SA), 23 October, 2001 (23.10.01), Column 3, line 1 to column 4, line 16; Fig. 2 & EP 1031645 A1        & FR 2790268 A | 1,3,4,6-10 |
| A | JP 2004-10904 A  (Permelec Electrode Ltd.), 15 January, 2004 (15.01.04), Par. Nos. [0015] to [0026] (Family: none) | 1-33 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 October, 2004 (25.10.04) | 09 November, 2004 (09.11.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)